# EUROPEAN PATENT SPECIFICATION

(11) **EP 2 847 503 B1**
(45) Date of publication and mention of the grant of the patent: **20.01.2016**
(21) Application number: 13724014.9
(22) Date of filing: 08.05.2013
(51) Int. Cl.: F16K 43/00

(54) **ASSEMBLY COMPRISING A CONNECTOR AND A SAFETY VALVE DEVICE**
ANORDNUNG MIT EINEM VERBINDER UND EINER SICHERHEITSVENTILVORRICHTUNG
ENSEMBLE COMPRENANT UN CONNECTEUR ET UN DISPOSITIF DE SOUPAPE DE SÉCURITÉ

(30) Priority: 11.05.2012 NL 2008802
(43) Date of publication of application: 18.03.2015
(73) Proprietor: Flamco B.V., 3751 LJ Bunschoten (NL)
(72) Inventor: CNOSSEN, Jan Henk, NL-8723 CP Koudum (NL); DEVLIN, Terence Arthur, NL-7312 AP Apeldoorn (NL); ZAANEN, Abraham, NL-2941 AP Lekkerkerk (NL)
(74) Representative: EP&C
(86) International application number: PCT/NL2013/050347
(87) International publication number: WO 2013/169107

(56) References cited:
- DE-A1- 2 335 196
- FR-A- 523 876
- GB-A- 466 311

## Description

The invention relates to an assembly comprising a connector for connecting a safety valve device to a fluid system, and a safety valve device. In general, the safety valve device comprises a valve body defining a valve channel having a valve inlet and a valve outlet. The valve inlet is connectable to the fluid system via the connector such that the valve inlet is in fluid connection with the fluid system. A safety valve is provided in the valve channel, which safety valve closes the valve channel when a fluid pressure at the valve inlet is lower than or equal to the predetermined value and opens the valve channel when the fluid pressure at the valve inlet exceeds the predetermined value. A similar assembly is disclosed in document DE 23 35 196 A1.

Such a safety valve device is in general used to ensure that the pressure in a fluid system, such as a central heating system, does not exceed the predetermined value. Once the safety valve device has been opened due to an overpressure and fluid from the fluid system has been dispensed out of the valve outlet, the safety valve will often not be able to completely close the valve channel any more. This is caused by pollution which in use accumulate at in the safety valve device. A safety valve device can for example be forced to dispense fluid from a central heating system when the expansion vessel does not function correctly and as a result of this the pressure in the central heating system exceeds the predetermined value. It is therefore preferred that when a expansion vessel is replaced, also the safety valve device is replaced.

It is an object to provide an improved, or at least alternative, assembly comprising a connector for connecting a safety valve device to a fluid system, and a safety valve device.

The object is achieve by an assembly comprising a connector for connecting a safety valve device to a fluid system, wherein;
- the connector comprises a connector body defining a connector channel having a connector inlet and a connector outlet,
- a connector valve is provided in the connector channel, which connector valve is movable into an open position and into a closed position,
- in the open position the connector valve does not close the connector channel and in the closed position the connector valve closes the connector channel, and
- the connector valve comprises a fluid passage which is sealed by a sealing member, which sealing member looses its sealing function when a fluid pressure at the connector inlet exceeds a predetermined value so that the connector inlet and connector outlet are in fluid connection while the connector valve is located in the closed position, and further comprising
   a safety valve device, wherein;
   - the safety valve device comprises a valve body defining a valve channel having a valve inlet and a valve outlet,
   - the valve inlet is connected to the connector outlet of the connector such that the connector valve is moved into the open position, and
   - a safety valve is provided in the valve channel, which safety valve closes the valve channel when a fluid pressure at the valve inlet is lower than or equal to the predetermined value and opens the valve channel when the fluid pressure at the valve inlet exceeds the predetermined value.

In the situation that the safety valve device is connected to a fluid system via the connector, the assembly allows to replace the safety valve device without draining off the fluid system and while maintaining a safety precaution to ensure that the pressure in the fluid system will not be too high. This because the connector with its connector valve having a fluid passage sealed by the sealing member, will take over the safety precaution once the safety valve device is disconnected.

In an embodiment of the assembly, the flow capacity through the connector channel of the connector in the situation that the connector valve is located in the closed position and the sealing member has lost its sealing function is equal to or larger than the flow capacity through the valve channel of the safety valve device in the situation that the safety valve opens the valve channel. This ensures that the amount of water which can flow per second through said connector channel is equal to or larger than the amount of water which can flow per second through said valve channel. This way the connector will no limit the discharge capacity of the safety valve device.

In an embodiment of the assembly, the flow capacity through the connector channel of the connector in the situation that the connector valve is located in the open position and the sealing member has its sealing function is equal to or larger than the flow capacity through the valve channel of the safety valve device in the situation that the safety valve opens the valve channel.

In an embodiment of the assembly,
- the connector channel and the connector valve located in the open position define a first fluid opening through which fluid can flow,
- the fluid passage not sealed by the sealing member defines a second fluid opening through which fluid can flow,
- the valve channel and the opened safety valve define a third fluid opening through which fluid can flow, and
- at a fluid pressure exceeding the predetermined value each of the first fluid opening and the second fluid opening is equal to or larger than the third fluid opening. In the situation that the safety valve device is connected to a fluid system via the connector, this ensures that when the fluid pressure in the fluid system exceeds the predetermined value, the connector will not limit the discharge capacity of the safety valve device. In the situation that the safety valve device is disconnected from the connector, this ensures that when the fluid pressure in the fluid system exceeds the predetermined value, the connector is able to discharge fluid from the fluid system with the same discharge capacity as the safety valve device.

In an embodiment of the assembly, the flow capacity through the connector inlet of the connector equals the flow capacity through the valve inlet of the safety valve device.

In an embodiment of the assembly, the size of the connector inlet of the connector is equal to the size of the valve inlet of the safety valve device

In an embodiment of the assembly, the connector valve is moved into the open position when in use the safety valve device is connected to the connector outlet and is moved into the closed position when in use the safety valve device is disconnected from the connector outlet. This way, the connector automatically closes once the safety valve device is disconnected from the connector. Due to this, no fluid will flow out of fluid system and the connector takes over the safety precaution to ensure that the pressure in the fluid system will not be too high.

In an embodiment of the assembly, the sealing member is connected to the connector valve and the sealing member looses its connection to the connector valve when the fluid pressure at the connector inlet exceeds the predetermined value.

In an embodiment of the assembly, the sealing member is connected to the connector valve and the sealing member breaks when the fluid pressure at the connector inlet exceeds the predetermined value.

In an embodiment of the assembly, a contact surface is provided in the connector channel and in the closed position the connector valve is in contact with the contact surface in a sealing manner.

In an embodiment of the assembly, in the open position the connector valve is located at a distance from the contact surface.

In an embodiment of the assembly, the connector valve comprises a drive member to drive the connector valve in the closed position.

The invention further relates to a kit of parts comprising a connector for connecting a safety valve device to a fluid system, wherein;
- the connector comprises a connector body defining a connector channel having a connector inlet and a connector outlet,
- a connector valve is provided in the connector channel, which connector valve is movable into an open position and into a closed position,
- in the open position the connector valve does not close the connector channel and in the closed position the connector valve closes the connector channel, and
- the connector valve comprises a fluid passage which is sealed by a sealing member, which sealing member looses its sealing function when a fluid pressure at the connector inlet exceeds a predetermined value so that the connector inlet and connector outlet are in fluid connection while the connector valve is located in the closed position, and further comprising
   a safety valve device, wherein;
- the safety valve device comprises a valve body defining a valve channel having a valve inlet and a valve outlet,
- the valve inlet is connectable to the connector outlet of the connector such that the connector valve is moved into the open position, and
- a safety valve is provided in the valve channel, which safety valve closes the valve channel when a fluid pressure at the valve inlet is lower than or equal to the predetermined value and opens the valve channel when the fluid pressure at the valve inlet exceeds the predetermined value.

In an embodiment of the kit of parts, the flow capacity through the connector channel of the connector in the situation that the connector valve is located in the closed position and the sealing member has lost its sealing function is equal to or larger than the flow capacity through the valve channel of the safety valve device in the situation that the safety valve opens the valve channel.

In an embodiment of the kit of parts, the flow capacity through the connector channel of the connector in the situation that the connector valve is located in the open position and the sealing member has its sealing function is equal to or larger than the flow capacity through the valve channel of the safety valve device in the situation that the safety valve opens the valve channel.

In an embodiment of the kit of parts,
- the connector channel and the connector valve located in the open position define a first fluid opening through which fluid can flow,
- the fluid passage not sealed by the sealing member defines a second fluid opening through which fluid can flow,
- the valve channel and the opened safety valve define a third fluid opening through which fluid can flow, and
- at a fluid pressure exceeding the predetermined value each of the first fluid opening and the second fluid opening is equal to or larger than the third fluid opening.

In an embodiment of the kit of parts, the flow capacity through the connector inlet of the connector equals the flow capacity through the valve inlet of the safety valve device.

In an embodiment of the kit of parts, the size of the connector inlet of the connector is equal to the size of the valve inlet of the safety valve device.

In an embodiment of the kit of parts, the connector valve is moved into the open position when in use the safety valve device is connected to the connector outlet and is moved into the closed position when in use the safety valve device is disconnected from the connector outlet.

In an embodiment of the kit of parts, the sealing member is connected to the connector valve and the sealing member looses its connection to the connector valve when the fluid pressure at the connector inlet exceeds the predetermined value.

In an embodiment of the kit of parts, the sealing member is connected to the connector valve and the sealing member breaks when the fluid pressure at the connector inlet exceeds the predetermined value.

In an embodiment of the kit of parts, a contact surface is provided in the connector channel and in the closed position the connector valve is in contact with the contact surface in a sealing manner.

In an embodiment of the kit of parts, in the open position the connector valve is located at a distance from the contact surface.

In an embodiment of the kit of parts, the connector valve comprises a drive member to drive the connector valve in the closed position.

The invention further relates to a fluid system comprising an assembly according to the invention, wherein the safety valve device is connected to the fluid system via the connector. The fluid system may be a heating system or a cooling system.

Embodiments of the assembly, the kit of parts, and the use thereof will be described by way of example only, with reference to the accompanying schematic drawings in which corresponding reference symbols indicate corresponding parts, and in which:
the Figures 1-3 schematically show a view in cross section of an embodiment of a connector according the invention,
the Figures 4 and 5 schematically show a view in cross section of an embodiment of an assembly comprising the connector of fig. 1-3 and a safety valve device,
Figure 6 schematically shows a view in cross section of an embodiment of a kit of parts comprising the connector of fig. 1-3 and the safety valve device of fig. 4-5, and
Figure 7 schematically shows a view in cross section of the connector of fig. 1-3.

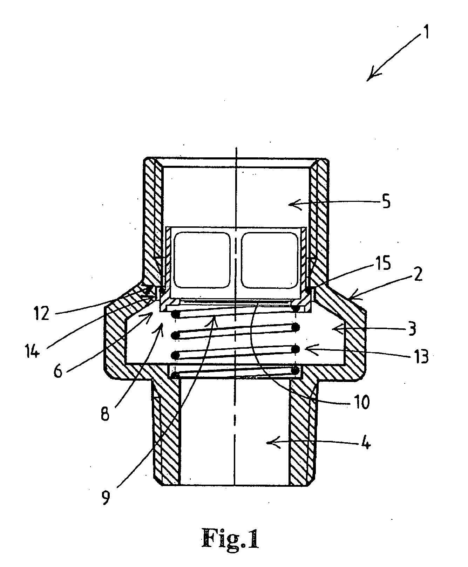

The figures 1-3 show a view in cross section of an embodiment of a connector 1 according the invention. The connector 1 is constructed to connect a safety valve device 31 to a fluid system. The connector 1 comprises a connector body 2 defining a connector channel 3 having a connector inlet 4 and a connector outlet 5. The connector valve 6 is provided in the connector channel 3. The connector valve 6 is movable into an open position 7 and into a closed position 8. In the open position 7 the connector valve 6 does not close the connector channel 3. In the closed position 8 the connector valve 6 closes the connector channel 3. The connector valve 6 comprises a fluid passage 9 which is sealed by a sealing member 10. The sealing member 10 is constructed and arranged to loose its sealing function when a fluid pressure at the connector inlet 4 exceeds a predetermined value so that the connector inlet 4 and connector outlet 5 are in fluid connection via the fluid passage 9 while the connector valve 6 is located in the closed position 8.

In fig. 1, the connector valve 6 is located in the closed position 8. The fluid passage 9 is sealed by the sealing member 10. This way, the fluid passage 9 is closed so that no fluid can flow trough the fluid passage 9. The sealing member 10 is connected to the connector valve 6. A contact surface 12 is provided in the connector channel 3. The contact surface 12 is provided on the inside connector wall 14 of the connector 1. In the closed position 8 the connector valve 6 is in contact with the contact surface 12 in a sealing manner. More specifically, the connector valve 6 comprises a connector valve member 15 and in the closed position 8; the connector valve member 15 is in contact with the contact surface 12 in a sealing manner. This way, the connector channel 3 is closed by the connector valve 6 so that no fluid can pass the connector valve 6. In said situation, the connector inlet 4 and the connector outlet 5 are not in fluid connection.

The connector valve 6 comprises a drive member 13 to drive the connector valve 6 in the closed position 8. The drive member 13 continuously applies a force to the connector valve 6 to drive the connector valve 6 into the closed position 8. The drive member 13 is a spring. In other examples, the drive member may be any other suitable driver constructed and arranged to drive the connector valve 6 in the closed position 8, such as a member made of resilient material. The connector valve member 15 extends through part of the connector channel 3. When the safety device 31 is connected to the connector outlet 5, the connector valve member 15 is pushed by the safety device 31 so that connector valve 6 is moved into the open position 7.

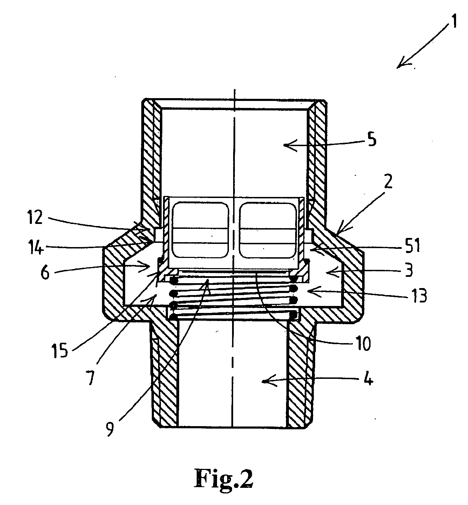

In fig. 2, the connector valve 6 is located in the open position 7. The fluid passage 9 is sealed by the sealing member 10. In the open position 7 the connector valve 6 is located at a distance from the contact surface 12. More specifically, the connector valve member 15 is located at a distance from the contact surface 12. This way, a first fluid opening 51 through which fluid can flow is created. This allows fluid to pass the connector valve 6. In said situation, the connector inlet 4 and the connector outlet 5 are in fluid connection via the first fluid opening 51.

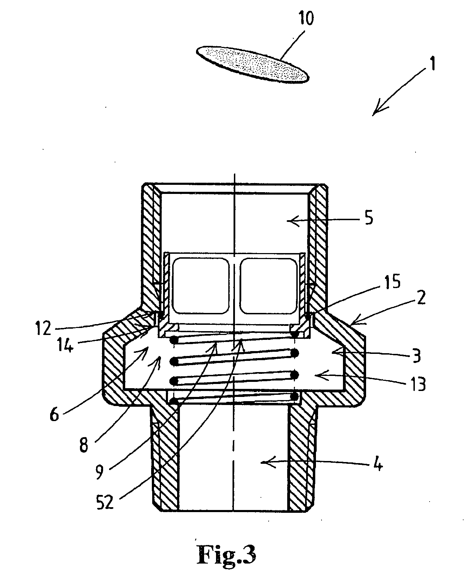

In fig. 3, the connector valve 6 is located in the closed position 8. The connector valve 6 is moved into the closed position 8 when in use the safety valve device 31 is disconnected from the connector 1. The sealing member 10 has lost its sealing function because a fluid pressure at the connector inlet 4 exceeded the predetermined value. A second fluid opening 52 through which fluid can flow is created. The sealing member 10 has lost its connection with the connector valve 6, so that the sealing member 10 is disconnected from the connector valve 6. In a different embodiment, the sealing member 10 remains connected to the connector valve 6 but breaks when the fluid pressure in the connector inlet 4 exceeds the predetermined value. Because the sealing member 10 is not sealing the fluid passage 9 anymore, fluid can flow through the fluid passage 9 (forming the second fluid opening 52) and pass the connector valve 6 located in the closed position 8. This way, the connector inlet 4 and the connector outlet 5 are in fluid connection via the second fluid opening 52 while the connector valve 6 is located in the closed position 8.

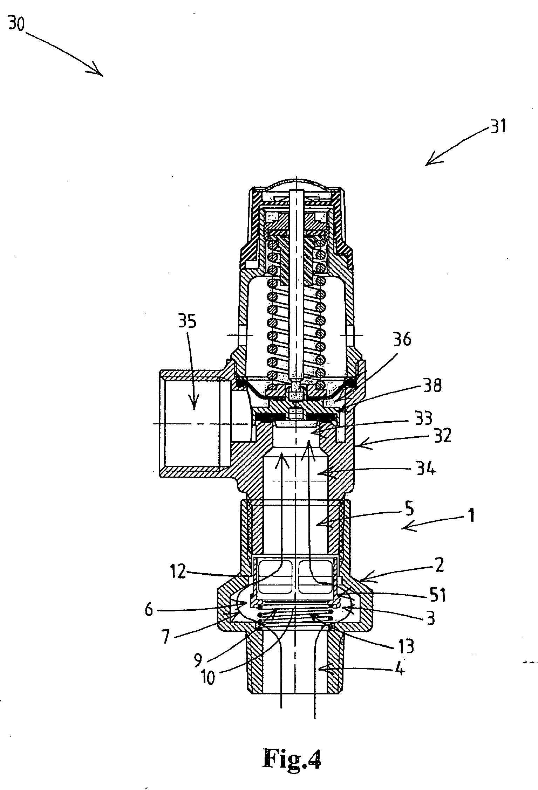

The fig. 4-7 indicate the use of the connector 1 when connected to a fluid system (not shown). The connector 1 is connected to the fluid system via the connector inlet 4. The flow direction of the fluid is in fig. 4-7 indicated by arrows.

In fig. 4, a safety valve device 31 is connected to the fluid system via the connector 1. The safety valve device 31 comprises a valve body 32 defining a valve channel 33 having a valve inlet 34 and a valve outlet 35. The valve inlet 34 is connected to the connector outlet 5 of the connector 1 such that the connector valve 6 is moved into the open position 7. A safety valve 36 is provided in the valve channel 33. The safety valve 36 is constructed and arranged to close the valve channel 33 when a fluid pressure at the valve inlet 34 is lower than or equal to the predetermined value and to open the valve channel 33 when the fluid pressure at the valve inlet 34 exceeds the predetermined value.

The connector valve 6 is moved in the open position 7 by the valve inlet 34 of the safety valve device 31 which is connected to connection outlet 5 of the connector 1. Fluid can flow through the first fluid opening 51 and pass the connector valve 6. The fluid can flow from the connector inlet 4 into the connector outlet 5 and the valve inlet 34. The connector inlet 4, the connector outlet 5 and the valve inlet 34 are in fluid connection. The flow capacity through the connector inlet 4 equals the flow capacity through the valve inlet 34. The size of the connector inlet 4 is equal to the size of the valve inlet 34.

In the situation shown, the fluid pressure in the fluid system is below the predetermined value. Therefore, the fluid pressure in the valve inlet 34 is smaller than the predetermined value. The valve channel 33 of the safety valve device 31 is closed by the safety valve 36. This means that the fluid is blocked by the safety valve 36. The fluid can not flow from the valve inlet 34 into the valve outlet 35.

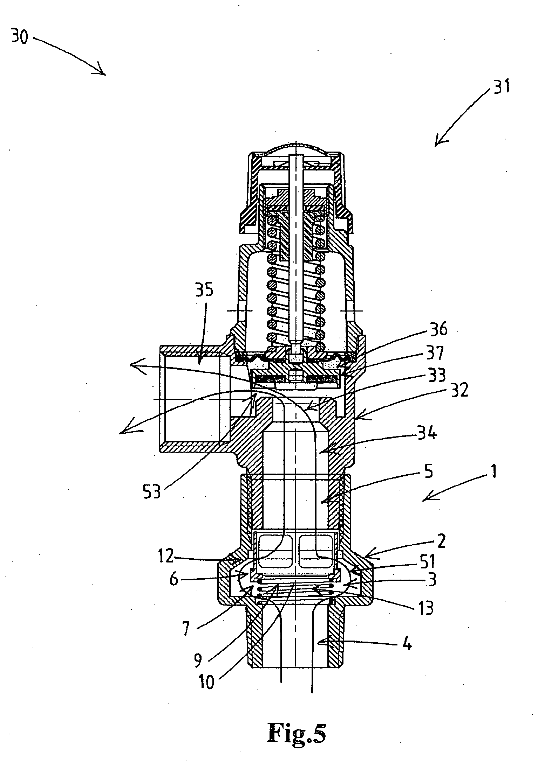

Fig. 5 shows the same situation as in fig. 4, but with the difference that the fluid pressure in the fluid system is increased and exceeds the predetermined value. This means that the fluid pressure in the valve inlet 34 also exceeds the predetermined value. The valve channel 33 of the safety valve device 31 is opened by the safety valve 36. This way, a third fluid opening 53 is created. This means that the fluid is not blocked by the safety valve 36. The fluid can flow from the valve inlet 34 into the valve outlet 35 via the third fluid opening 53. The connector inlet 4, the connector outlet 5, the valve inlet 34 and the valve outlet 35 are in fluid connection. The fluid can flow out of the valve outlet 35 and leave the fluid system. As a result of this, the pressure in the fluid system (and therefore also in the valve inlet 34) will drop. When the pressure drops to a value below or equal to the predetermined value, the safety valve 36 will close the valve channel 33 again so that no fluid can flow out of the valve outlet 35 and leave the fluid system. This way, the assembly of the connector 1 and safety valve device 31 ensures that the pressure in the fluid system does not exceed the predetermined value.

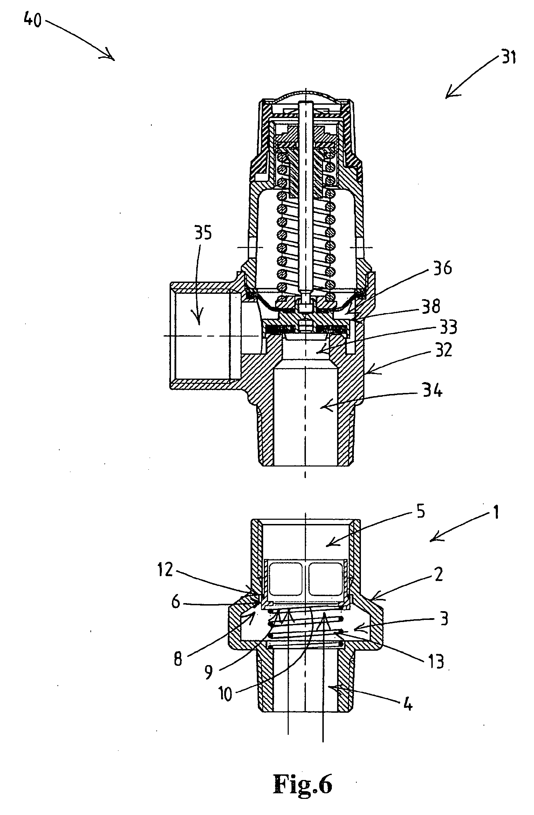

In fig. 6, the safety valve device 31 is disconnected from the connector 1. In practice, there are many reasons why the safety valve device 31 will be disconnected from the fluid system. This may for example be when the safety valve device 31 is replaced during maintenance of the fluid system.

When the safety valve device 31 is disconnected from the connector 1, the connector valve 6 is moved into the closed position by the drive member 13.

In the closed position 8, the connector valve 6 blocks the fluid so that the fluid can not flow from the connector inlet 4 into the connector outlet 5. This way, the fluid can not leave the fluid system. This makes it possible that the safety valve device 31 can be disconnected from the fluid system without the need that the fluid first has to be removed from the fluid system.

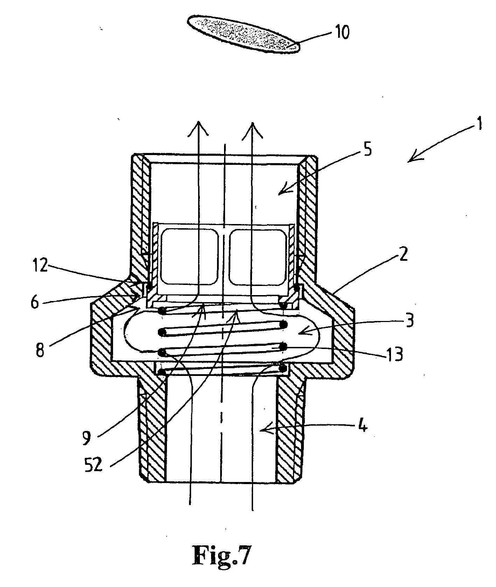

If in the situation shown in fig. 7, the fluid pressure in the fluid system (and therefore also at the connecter inlet 4) exceed the predetermined value, the sealing member 10 will loose its sealing function so that the connector inlet 4 and connector outlet 5 are in fluid connection via the fluid passage 9 (forming the second fluid passage 52) while the connector valve 6 is located in the closed position 8. This way, the fluid is able to flow from the connector inlet 4 into the connector outlet 5 and leave the fluid system via the connector outlet 5 so that the pressure in the fluid system will drop. This situation is shown in fig. 7. The connector 1 ensures that the pressure in the fluid system does not exceed the predetermined value in the situation that the safety valve device 31 is disconnected from the fluid system, more specifically that the safety valve device 31 is disconnected from the connector 1. The connector 1 and the safety valve device 31 discharge the fluid at the same predetermined pressure. This allows that the safety valve device 31 can be removed without first (partly) removing the fluid from the fluid system and without the risk that the pressure in the fluid system will exeed the predetermined pressure when the safety valve device is disconnected from the fluid system. This way, it is for example possible to preplaced the safety valve device in time efficient and save manner.

The flow capacity through the connector channel 3 of the connector 1 in the situation that the connector valve 6 is located in the closed position 8 and the sealing member 10 has lost its sealing function is equal to or larger than the flow capacity through the valve channel 33 of the safety valve device 31 in the situation that the safety valve 36 opens the valve channel 33. This ensures that the amount of water which can flow per second through said connector channel 3 is equal to or larger than the amount of water which can flow per second through said valve channel 33.

The flow capacity through the connector channel 3 of the connector 1 in the situation that the connector valve 6 is located in the open position 8 and the sealing member 10 has its sealing function is equal to or larger than the flow capacity through the valve channel 33 of the safety valve device 31 in the situation that the safety valve 36 opens the valve channel 33.

Each of the first fluid opening 51 and the second fluid opening 52 is equal to or larger than the third fluid opening 53.

It will be apparent to those skilled in the art that various modifications can be made to the connector, the assembly, the kit of parts and the use without departing from the scope as defined by the claims.

## Claims

1. Assembly comprising
a connector (1) for connecting a safety valve device (31) to a fluid system, wherein:
- the connector comprises a connector body (2) defining a connector channel (3) having a connector inlet (4) and a connector outlet (5),
- a connector valve (6) is provided in the connector channel (3), which connector valve (6) is movable into an open position and into a closed position,
- in the open position the connector valve (6) does not connector connector channel (3) and in the closed position the connector valve (6) closes the connector channel (3), and
- the connector valve (6) comprises a fluid passage (9) which is sealed by a sealing member (10), which sealing member (10) looses its sealing function when a fluid pressure at the connector inlet (4) exceeds a predetermined value so that the connector inlet (4) and connector outlet (5) are in fluid connection while the connector valve (6) is located in the closed position, and further comprising
a safety valve device (31), wherein;
- the safety valve device (31) comprises a valve body (32) defining a valve channel (33) having a valve inlet (34) and a valve outlet (35),
- the valve inlet (34) is connected to the connector outlet (5) of the connector such that the connector valve (6) is moved into the open position, and
- a safety valve (36) is provided in the valve channel (33), which safety valve (36) closes the valve channel when a fluid pressure at the valve inlet (34) is lower than or equal to the predetermined value and opens the valve channel (33) when the fluid pressure at the valve inlet (34) exceeds the predetermined value.

2. Assembly according to claim 1, wherein the flow capacity through the connector channel (3) of the connector in the situation that the connector valve (6) is located in the closed position and the sealing member (10) has lost its sealing function is equal to or larger than the flow capacity through the valve channel (33) of the safety valve device (31) in the situation that the safety valve opens the valve channel (33).

3. Assembly according to claim 1 or 2, wherein the flow capacity through the connector channel (3) of the connector (1) in the situation that the connector valve (6) is located in the open position and the sealing member (10) has its sealing function equal to or larger than the flow capacity through the valve channel (33) of the safety valve device (31) in the situation that the safety valve (36) opens the valve channel (33).

4. Assembly according to any of the preceding claims, wherein
- the connector channel (3) and the connector valve (6) located in the open position define a first fluid opening through which fluid can flow,
- the fluid passage not sealed by the sealing member (10) defines a second fluid opening through which fluid can flow,
- the valve channel (3) and the opened safety valve (36) define a third fluid opening through which fluid can flow, and
- at a fluid pressure exceeding the predetermined value each of the first fluid opening and the second fluid opening is equal to or larger than the third fluid opening.

5. Assembly according to any of the preceding claims, wherein the flow capacity through the connector inlet (4) of the connector (1) equals the flow capacity through the valve inlet (34) of the safety valve device (31).

6. Assembly according to any of the preceding claims, wherein the size of the connector inlet (4) of the connector (1) is equal to the size of the valve inlet (34) of the safety valve device (31).

7. Assembly according to any of the preceding claims, wherein the connector valve (6) is moved into the open position when in use the safety valve (36) device is connected to the connector outlet (5) and is moved into the closed position when in use the safety valve device (31) is disconnected from the connector outlet (5).

8. Assembly according to any of the preceding claims, wherein the sealing member (10) is connected to the connector valve (6) and the sealing member (10) looses its connection to the connector valve (6) when the fluid pressure at the connector inlet (4) exceeds the predetermined value.

9. Assembly according to any of the preceding claims, wherein the sealing member (10) is connected to the connector valve (6) and the sealing member (10) breaks when the fluid pressure at the connector inlet (4) exceeds the predetermined value.

10. Assembly according to any of the preceding claims, wherein a contact surface (12) is provided in the connector channel (3) and in the closed position the connector valve (6) is in contact with the contact surface (12) in a sealing manner.

11. Assembly according to claim 10, wherein in the open position the connector valve (6) is located at a distance from the contact surface (12).

12. Assembly according to any of the preceding claims, wherein the connector valve (6) comprises a drive member (13) to drive the connector valve (6) in the closed position.

13. Kit of parts comprising
a connector (1) for connecting a safety valve device (31) to a fluid system, wherein;
- the connector (1) comprises a connector body (2) defining a connector channel (3) having a connector inlet (4) and a connector outlet (5),
- a connector valve (6) is provided in the connector channel (3), which connector valve (6) is movable into an open position and into a closed position,
- in the open position the connector valve (6) does not close the connector channel (3) and in the closed position the connector valve (6) closes the connector channel (3), and
- the connector valve (6) comprises a fluid passage which is sealed by a sealing member (10), which sealing member (10) looses its sealing function when a fluid pressure at the connector inlet (4) exceeds a predetermined value so that the connector inlet (4) and connector outlet (5) are in fluid connection while the connector valve (6) is located in the closed position, and further comprising
a safety valve device (31), wherein;
- the safety valve device (31) comprises a valve body (32) defining a valve channel (33) having a valve inlet (34) and a valve outlet (35),
- the valve inlet (34) is connectable to the connector outlet (5) of the connector (1) such that the connector valve is moved into the open position, and
- a safety valve (36) is provided in the valve channel (33), which safety valve (36) closes the valve channel (33) when a fluid pressure at the valve inlet is lower than or equal to the predetermined value and opens the valve channel (33) when the fluid pressure at the valve inlet (34) exceeds the predetermined value.

14. Fluid system comprising an assembly according to any of the claims 1-12, wherein the safety valve device (31) is connected to the fluid system via the connector (1).

15. Fluid system according to claim 14, wherein the fluid system is a heating system or a cooling system.

## Patentansprüche

1. Anordnung, umfassend
ein Verbindungsstück (1) zum Verbinden einer Sicherheitsventilvorrichtung (31) mit einem Fluidsystem, wobei;
- das Verbindungsstück einen Verbindungsstückkörper (2) umfasst, der einen Verbindungsstückkanal (3), der einen Verbindungsstückeinlass (4) und einen Verbindungsstückauslass (5) aufweist, definiert,
- ein Verbindungsstückventil (6) in dem Verbindungsstückkanal (3) bereitgestellt ist, wobei das Verbindungsstückventil (6) in eine offene Position und in eine geschossene Position bewegbar ist,
- in der offenen Position das Verbindungsstückventil (6) den Verbindungsstückkanal (3) nicht verschließt und in der geschlossenen Position das Verbindungsstückventil (6) den Verbindungsstückkanal (3) verschießt, und
- das Verbindungsstückventil (6) einen Fluiddurchlass (9) umfasst, der mit einem Dichtelement (10) abgedichtet ist, wobei das Dichtelement (10) seine Dichtfunktion verliert, wenn ein Fluiddruck an dem Verbindungsstückeinlass (4) einen vorherbestimmten Wert übersteigt, sodass der Verbindungsstückeinlass (4) und der Verbindungsstückauslass (5), während das Verbindungsstückventil (6) in der geschlossenen Position angeordnet ist, in Fluidverbindung stehen, und ferner umfassend
eine Sicherheitsventilvorrichtung (31), wobei;
- die Sicherheitsventilvorrichtung (31) einen Ventilkörper (32) umfasst, der einen Ventil kanal (33), der einen Ventileinlass (34) und einen Ventilauslass (35) aufweist, definiert,
- der Ventileinlass (34) mit dem Verbindungsstückauslass (5) des Verbindungsstücks so verbunden ist, dass das Verbindungsstückventil (6) in die offene Position bewegt wird, und
- das Sicherheitsventil (36) in dem Ventilkanal (33) bereitgestellt ist, wobei das Sicherheitsventil (36) den Ventilkanal verschließt, wenn ein Fluiddruck an dem Ventileinlass (34) geringer oder gleich dem vorherbestimmten Wert ist, und wobei das Sicherheitsventil (36) den Ventilkanal (33) öffnet, wenn der Fluiddruck an dem Ventileinlass (34) den vorherbestimmten Wert übersteigt.

2. Anordnung nach Anspruch 1, wobei die Durchflusskapazität durch den Verbindungsstückkanal (3) des Verbindungsstücks in der Situation, in der das Verbindungsstückventil (6) in der geschlossenen Position angeordnet ist und das Dichtelement (10) seine Dichtfunktion verloren hat, gleich oder größer als die Durchflusskapazität durch den Ventilkanal (33) der Sicherheitsventilvorrichtung (31) in der Situation ist, in der das Sicherheitsventil den Ventilkanal (33) öffnet.

3. Anordnung nach Anspruch 1 oder 2, wobei die Durchflusskapazität durch den Verbindungsstückkanal (3) des Verbindungsstücks (1) in der Situation, in der das Verbindungsstückventil (6) in der offenen Position angeordnet ist und das Dichtelement (10) seine Dichtfunktion erfüllt, gleich oder größer als die Durchflusskapazität durch den Ventilkanal (33) der Sicherheitsventilvorrichtung (31) in der Situation ist, in der das Sicherheitsventil (36) den Ventilkanal (33) öffnet.

4. Anordnung nach einem der vorhergehenden Ansprüche, wobei
- der Verbindungsstückkanal (3) und das Verbindungsstückventil (6), das in der offenen Position angeordnet ist, eine erste Fluidöffnung definieren, durch die Fluid strömen kann,
- der Fluiddurchlass, der nicht durch das Dichtelement (10) abgedichtet ist, eine zweite Fluidöffnung definiert, durch die Fluid strömen kann,
- der Ventilkanal (3) und das geöffnete Sicherheitsventil (36) eine dritte Fluidöffnung definieren, durch die Fluid strömen kann, und
- bei einem Fluiddruck, der den vorherbestimmten Wert übersteigt, sowohl die erste Fluidöffnung als auch die zweite Fluidöffnung gleich oder größer als die dritte Fluidöffnung sind.

5. Anordnung nach einem der vorhergehenden Ansprüche, wobei die Durchflusskapazität durch den Verbindungsstückeinlass (4) des Verbindungsstücks (1) gleich der Durchflusskapazität durch den Ventileinlass (34) der Sicherheitsventilvorrichtung (31) ist.

6. Anordnung nach einem der vorhergehenden Ansprüche, wobei die Größe des Verbindungsstückeinlasses (4) des Verbindungsstücks (1) gleich der Größe des Ventileinlasses (34) von der Sicherheitsventilvorrichtung (31) ist.

7. Anordnung nach einem der vorhergehenden Ansprüche, wobei das Verbindungsstückventil (6) in die offene Position bewegt wird, wenn in Verwendung die Sicherheitsventilvorrichtung (36) mit dem Verbindungsstückauslass (5) verbunden wird, und wobei das Verbindungsstückventil (6) in die geschlossene Position bewegt wird, wenn in Verwendung die Sicherheitsventilvorrichtung (31) von dem Verbindungsstückauslass (5) abgekoppelt wird.

8. Anordnung nach einem der vorhergehenden Ansprüche, wobei das Dichtelement (10) mit dem Verbindungsstückventil (6) verbunden ist und das Dichtelement (10) seine Verbindung zu dem Verbindungsstückventil (6) verliert, wenn der Fluiddruck an dem Verbindungsstückeinlass (4) den vorherbestimmten Wert übersteigt.

9. Anordnung nach einem der vorhergehenden Ansprüche, wobei das Dichtelement (10) mit dem Verbindungsstückventil (6) verbunden ist und das Dichtelement (10) bricht, wenn der Fluiddruck an dem Verbindungsstückeinlass (4) den vorherbestimmten Wert übersteigt.

10. Anordnung nach einem der vorhergehenden Ansprüche, wobei eine Kontaktoberfläche (12) in dem Verbindungsstückkanal (3) bereitgestellt ist und in der geschlossenen Position das Verbindungsstückventil (6) mit der Kontaktoberfläche (12) auf eine abdichtende Weise in Kontakt steht.

11. Anordnung nach Anspruch 10, wobei in der offenen Position das Verbindungsstückventil (6) in einem Abstand zu der Kontaktoberfläche (12) angeordnet ist.

12. Anordnung nach einem der vorhergehenden Ansprüche, wobei das Verbindungsstückventil (6) ein Antriebselement (13) umfasst, um das Verbindungsstückventil (6) in die geschlossene Position zu anzutreiben.

13. Teilesatz, umfassend
ein Verbindungsstück (1) zum Verbinden einer Sicherheitsventilvorrichtung (31) mit einem Fluidsystem, wobei;
- das Verbindungsstück (1) einen Verbindungsstückkörper (2) umfasst, der einen Verbindungsstückkanal (3), der einen Verbindungsstückeinlass (4) und einen Verbindungsstückauslass (5) aufweist, definiert,
- ein Verbindungsstückventil (6) in dem Verbindungsstückkanal (3) bereitgestellt ist, wobei das Verbindungsstückventil (6) in eine offene Position und in eine geschossene Position bewegbar ist,
- in der offenen Position das Verbindungsstückventil (6) den Verbindungsstückkanal (3) nicht verschließt und in der geschlossenen Position das Verbindungsstückventil (6) den Verbindungsstückkanal (3) verschießt, und
- das Verbindungsstückventil (6) einen Fluiddurchlass umfasst, der mit einem Dichtelement (10) abgedichtet ist, wobei das Dichtelement (10) seine Dichtfunktion verliert, wenn ein Fluiddruck an dem Verbindungsstückeinlass (4) einen vorherbestimmten Wert übersteigt, sodass der Verbindungsstückeinlass (4) und der Verbindungsstückauslass (5), während das Verbindungsstückventil (6) in der geschlossenen Position angeordnet ist, in Fluidverbindung stehen, und ferner umfassend
eine Sicherheitsventilvorrichtung (31), wobei;
- die Sicherheitsventilvorrichtung (31) einen Ventilkörper (32) umfasst, der einen Ventil kanal (33), der einen Ventileinlass (34) und einen Ventilauslass (35) aufweist, definiert,
- der Ventileinlass (34) mit dem Verbindungsstückauslass (5) des Verbindungsstücks (1) so verbindbar ist, dass das Verbindungsstückventil in die offene Position bewegt wird, und
- das Sicherheitsventil (36) in dem Ventilkanal (33) bereitgestellt ist, wobei das Sicherheitsventil (36) den Ventilkanal (33) verschließt, wenn ein Fluiddruck an dem Ventileinlass geringer oder gleich dem vorherbestimmten Wert ist, und wobei das Sicherheitsventil (36) den Ventilkanal (33) öffnet, wenn der Fluiddruck an dem Ventileinlass (34) den vorherbestimmten Wert übersteigt.

14. Fluidsystem, umfassend eine Anordnung nach einem der Ansprüche 1 - 12, wobei das Sicherheitsventil (31) mit dem Fluidsystem über das Verbindungsstück (1) verbunden ist.

15. Fluidsystem nach Anspruch 14, wobei das Fluidsystem ein Heizsystem oder ein Kühlsystem ist.

## Revendications

1. Ensemble comprenant
un connecteur (1) pour connecter un dispositif à soupape de sécurité (31) à un système de fluide, dans lequel :
- le connecteur comprend un corps de connecteur (2) définissant un canal de connecteur (3) pourvu d'une entrée de connecteur (4) et d'une sortie de connecteur (5),
- une soupape de connecteur (6) est prévue dans le canal de connecteur (3), laquelle soupape de connecteur (6) est mobile dans une position ouverte et dans une position fermée,
- dans la position ouverte la soupape de connecteur (6) ne ferme pas le canal de connecteur (3) et dans la position fermée la soupape de connecteur (6) ferme le canal de connecteur (3), et
- la soupape de connecteur (6) comprend un passage de fluide (9) qui est fermé de façon étanche par un élément d'étanchéité (10), lequel élément d'étanchéité (10) perd sa fonction d'étanchéité lorsqu'une pression de fluide à l'entrée de connecteur (4) dépasse une valeur prédéterminée de sorte que l'entrée de connecteur (4) et la sortie de connecteur (5) sont en communication fluidique tandis que la soupape de connecteur (6) se trouve dans la position fermée, et comprenant en outre
un dispositif à soupape de sécurité (31), dans lequel :
- le dispositif à soupape de sécurité (31) comprend un corps de soupape (32) définissant un canal de soupape (33) pourvu d'une entrée de soupape (34) et d'une sortie de soupape (35),
- l'entrée de soupape (34) est reliée à la sortie de connecteur (5) du connecteur de telle sorte que la soupape de connecteur (6) est déplacée dans la position ouverte, et
- une soupape de sécurité (36) est prévue dans le canal de soupape (33), laquelle soupape de sécurité (36) ferme le canal de soupape (33) lorsqu'une pression de fluide à l'entrée de soupape (34) est inférieure ou égale à la valeur prédéterminée, et ouvre le canal de soupape (33) lorsque la pression du fluide à l'entrée de soupape (34) dépasse la valeur prédéterminée.

2. Ensemble selon la revendication 1, dans lequel la capacité d'écoulement à travers le canal de connecteur (3) du connecteur, dans la situation dans laquelle la soupape de connecteur (6) se trouve dans la position fermée et l'élément d'étanchéité (10) a perdu sa fonction d'étanchéité, est supérieure ou égale à la capacité d'écoulement à travers le canal de soupape (33) du dispositif à soupape de sécurité (31), dans la situation dans laquelle la soupape de sécurité ouvre le canal de la soupape (33).

3. Ensemble selon la revendication 1 ou 2, dans lequel la capacité d'écoulement à travers le canal de connecteur (3) du connecteur (1), dans la situation dans laquelle la soupape de connecteur (6) se trouve dans la position ouverte et l'élément d'étanchéité (10) a sa fonction d'étanchéité, est supérieure ou égale à la capacité d'écoulement à travers le canal de soupape (33) du dispositif à soupape de sécurité (31), dans la situation dans laquelle la soupape de sécurité (36) ouvre le canal de soupape (33).

4. Ensemble selon l'une quelconque des revendications précédentes, dans lequel
- le canal de connecteur (3) et la soupape de connecteur (6) se trouvant dans la position ouverte définissent une première ouverture de fluide par laquelle le fluide peut circuler,
- le passage de fluide, qui n'est pas fermé de façon étanche par l'élément d'étanchéité (10), définit une deuxième ouverture de fluide par laquelle le fluide peut circuler,
- le canal de soupape (3) et la soupape de sécurité (36) ouverte définissent une troisième ouverture de fluide par laquelle le fluide peut circuler, et
- à une pression de fluide supérieure à la valeur prédéterminée la première ouverture de fluide et la deuxième ouverture de fluide sont toutes les deux supérieures ou égales à la troisième ouverture de fluide.

5. Ensemble selon l'une quelconque des revendications précédentes, dans lequel la capacité d'écoulement à travers l'entrée de connecteur (4) du connecteur (1) est égale à la capacité d'écoulement à travers l'entrée de soupape (34) du dispositif à soupape de sécurité (31).

6. Ensemble selon l'une quelconque des revendications précédentes, dans lequel la dimension de l'entrée de connecteur (4) du connecteur (1) est égale à la dimension de l'entrée de soupape (34) du dispositif à soupape de sécurité (31) .

7. Ensemble selon l'une quelconque des revendications précédentes, dans lequel la soupape de connecteur (6) est déplacée dans la position ouverte lorsque, en utilisation, le dispositif à soupape de sécurité (36) est relié à la sortie de connecteur (5) et est déplacée dans la position fermée lorsque, en utilisation, le dispositif à soupape de sécurité (31) est déconnecté de la sortie de connecteur (5).

8. Ensemble selon l'une quelconque des revendications précédentes, dans lequel l'élément d'étanchéité (10) est relié à la soupape de connecteur (6) et l'élément d'étanchéité (10) perd sa connexion à la soupape de connecteur (6) lorsque la pression du fluide à l'entrée de connecteur (4) est supérieure à la valeur prédéterminée.

9. Ensemble selon l'une quelconque des revendications précédentes, dans lequel l'élément d'étanchéité (10) est relié à la soupape de connecteur (6) et l'élément d'étanchéité (10) se casse lorsque la pression du fluide à l'entrée de connecteur (4) est supérieure à la valeur prédéterminée.

10. Ensemble selon l'une quelconque des revendications précédentes, dans lequel une surface de contact (12) est prévue dans le canal de connecteur (3) et dans la position fermée la soupape de connecteur (6) est en contact avec la surface de contact (12) de manière étanche.

11. Ensemble selon la revendication 10, dans lequel dans la position ouverte la soupape de connecteur (6) se trouve à une distance de la surface de contact (12).

12. Ensemble selon l'une quelconque des revendications précédentes, dans lequel la soupape de connecteur (6) comprend un élément d'entraînement (13) destiné à entraîner la soupape de connecteur (6) dans la position fermée.

13. Kit de pièces comprenant
un connecteur (1) destiné à relier un dispositif à soupape de sécurité (31) à un système de fluide, dans lequel :
- le connecteur (1) comprend un corps de connecteur (2) définissant un canal de connecteur (3) pourvu d'une entrée de connecteur (4) et d'une sortie de connecteur (5),
- une soupape de connecteur (6) est prévue dans le canal de connecteur (3), laquelle soupape de connecteur (6) est mobile dans une position ouverte et dans une position fermée,
- dans la position ouverte la soupape de connecteur (6) ne ferme pas le canal de connecteur (3) et dans la position fermée la soupape de connecteur (6) ferme le canal de connecteur (3), et
- la soupape de connecteur (6) comprend un passage de fluide qui est fermé de façon étanche par un élément d'étanchéité (10), lequel élément d'étanchéité (10) perd sa fonction d'étanchéité lorsqu'une pression de fluide à l'entrée de connecteur (4) dépasse une valeur prédéterminée de sorte que l'entrée de connecteur (4) et la sortie de connecteur (5) sont en communication fluidique tandis que la soupape de connecteur (6) se trouve dans la position fermée, et comprenant en outre
un dispositif à soupape de sécurité (31), dans lequel :
- le dispositif à soupape de sécurité (31) comprend un corps de soupape (32) définissant un canal de soupape (33) pourvu d'une entrée de soupape (34) et d'une sortie de soupape (35),
- l'entrée de soupape (34) peut être reliée à la sortie de connecteur (5) du connecteur de telle sorte que la soupape de connecteur (1) est déplacée dans la position ouverte, et
- une soupape de sécurité (36) est prévue dans le canal de soupape (33), laquelle soupape de sécurité (36) ferme le canal de soupape (33) lorsqu'une pression de fluide à l'entrée de soupape est inférieure ou égale à la valeur prédéterminée, et ouvre le canal de soupape (33) lorsque la pression du fluide à l'entrée de soupape (34) dépasse la valeur prédéterminée.

14. Système de fluide comprenant un ensemble selon l'une quelconque des revendications 1 à 12, dans lequel le dispositif à soupape de sécurité (31) est relié au système de fluide par le biais du connecteur (1).

15. Système de fluide selon la revendication 14, dans lequel le système de fluide est un système de chauffage ou un système de refroidissement.
